# EUROPEAN PATENT SPECIFICATION

(11) **EP 3 823 518 B1**
(45) Date of publication and mention of the grant of the patent: **06.03.2024**
(21) Application number: 18766038.6
(22) Date of filing: 18.07.2018
(51) Int. Cl.: A61B 3/113, G09B 23/30

(54) **ARTIFICIAL EYE FOR CALIBRATION OF AN EYE-TRACKER, EYE TRACKING CALIBRATION SYSTEM AND METHOD THEREOF**
KÜNSTLICHES AUGE ZUR KALIBRIERUNG EINES AUGENTRACKERS, SYSTEM ZUR AUGENTRACKING-KALIBRIERUNG UND VERFAHREN DAFÜR
OEIL ARTIFICIEL POUR ÉTALONNAGE D'UN DISPOSITIF DE SUIVI D'OEIL, SYSTÈME D'ÉTALONNAGE DE SUIVI D'OEIL ET PROCÉDÉ ASSOCIÉ

(30) Priority: 16.07.2018 PT 2018110854
(43) Date of publication of application: 26.05.2021
(73) Proprietor: Bosch Car Multimedia Portugal, S.A., 4705-820 Braga (PT); Universidade do Minho, 4704-553 Braga (PT)
(72) Inventor: GONÇALVES FERNANDES FERREIRA, Flávio Pedro, 4710-385 Braga (PT); TEIXEIRA MACEDO, António Filipe, 39231 Kamar (SE); FERREIRA MARQUES, Isabel Maria, 4705-820 Braga (PT); NEVES SOUSA, Marco António, 4500-744 Nogueira Da Regedoura (PT); CORREIA, Helder Tiago, 4705-820 Braga (PT); NUNES PEREIRA, Eduardo Jorge, 4710 - 057 Braga (PT); JEAN BRET, Boris Paul, 4705-820 Braga (PT)
(74) Representative: Patentree
(86) International application number: PCT/IB2018/055345
(87) International publication number: WO 2020/016631

(56) References cited:
- EP-A2- 0 940 118
- US-A1- 2011 170 059
- WANG DONG ET AL: "A study of artificial eyes for the measurement of precision in eye-trackers", BEHAVIOR RESEARCH METHODS, SPRINGER US, NEW YORK, vol. 49, no. 3, 6 July 2016 (2016-07-06), pages 947-959, XP036271596, DOI: 10.3758/S13428-016-0755-8 [retrieved on 2016-07-06]

## Description

### TECHNICAL FIELD

The present disclosure relates to an eye tracking calibration system and, specifically, to an artificial eye device simulating the human eye gazing behaviour and which can be used to test the accuracy of eye trackers at determining eye gaze directions.

### BACKGROUND

Eye tracker systems are advantageous for using in automotive applications for various reasons. For example, by integrating eye tracking data, the information displayed on a head-up display, HUD, can be adapted taking into account the gaze direction of a user of said HUD. For example, document WO2012034767 discloses head-up displays for vehicles, which use a transparent surface in the vehicle in the viewing direction of an observer as a display area for displaying information by means of an imaging unit, wherein a representation optics is arranged between the imaging unit and the display area, comprising adjustment means by means of which information displayed can be adjusted to different eye positions of the observer.

For accurate eye tracking measurements, that is, how well the reported position of gaze - reported by the eye tracker - matches the position of the target at which the subject is looking, the current state-of-the-art test is a human observer. The use of human subjects for accuracy measurements has limitations such as not being objective because it needs to be assumed that the human subject is looking at the centre of the target and because the human eye is in constant movement [4]. In industrial applications, systems need to be accurate and precise and there is the need of objective testing. Therefore, there is the need to develop a human-like artificial eye that can be detected and followed by eye-tracker algorithms. Such a device can be used in several different areas ranging from automotive manufacturing to virtual reality systems.

To evaluate the tracking functioning of an eye tracker system, one needs to perform a calibration process of that system. This calibration process is usually done with a human subject looking at specific target points in 3D space, while the eye tracker video system captures the reflections (glints) of one or more fixed light sources onto the cornea surface of the subject eyes.

A processor computes the eye gaze directions from the glints and the pupil positions on the video images, by means of an optimization algorithm that fits the expected gaze vectors to the calculated gaze vectors, by means of a mathematical model containing several geometric eye-model parameters - see document WO2017156486A1 and references therein. During calibration, the eye parameters are determined, and the accuracy of gaze positions reported by eye trackers is optimized.

Although an eye tracker calibration profile must be made for each different end-user, see document US6873714B2, some industrial applications, such as quality testing of an eye tracker product in the production line or the optimization of an eye-tracker prototype, may only require a single test subject to detect several product malfunctions. However, a human test subject is prone to subjective errors and to fatigue when performing the same tests repeatedly.

### References:

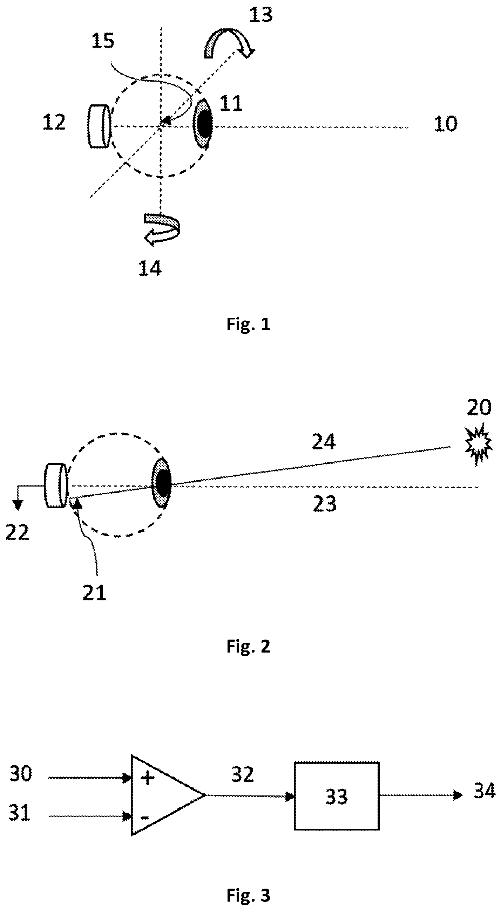

[1] Specification of Gaze Precision and Gaze Accuracy, retrieved from www.tobii.com
[2] Harrer et al. J Cataract Refract Surg. 2017;43(8):1015-1019.
[3] Wang, D., Mulvey, F.B., Pelz, J.B. et al. Behav Res (2017) 49: 947-959, describes a test of artificial eyes for the calibration of different eye trackers. The artificial eyes are fixed on a gimbal mount with a laser attached to the top of the eye (figure 3) to indicate the orientation of the eye.
[4] Reingold, Eyal M. "Eye Tracking Research and Technology: Towards Objective Measurement of Data Quality." Visual Cognition 22.3 (2014): 635-652. PMC. Web. 15 May 2018.

These facts are disclosed in order to illustrate the technical problem addressed by the present disclosure.

### GENERAL DESCRIPTION

The present disclosure relates to calibration of eye tracking systems and, specifically, to an artificial eye device simulating the human eye gazing behaviour and which can be used to test the accuracy of eye trackers at determining eye gaze directions.

To address the aforesaid problems, it may be useful to have an artificial subject comprising artificial eyes with gazing capacity, allowing an autonomous gaze calibration test of any eye tracker system. Hereafter, we shall concern with the eyes part of the artificial subject, and consider the face part of the artificial subject as an optional test dummy. Although artificial eyes have been disclosed, there is a need for an active device having a gazing ability, i.e., the ability of a human-like artificial eye to provide signal of an operative alignment between the eye and calibration target.

While the present disclosure is applicable to functional quality testing of an eye tracker in production, it will be understood that the disclosure is applicable, as well, to performance testing of an eye tracker product in development, or to any situation in which the evaluation of the tracking functioning of an eye tracker system is desirable.

The disclosure relates to a device and method to calibrate eye-tracking systems with artificial eyes. The artificial eyes comprise an artificial corneal surface, a pupil, a lens, and an artificial fovea. The artificial fovea consists of a position sensing detector (PSD). The artificial eye is supported by a motorized mount. As an example of motorized mount for the artificial eye a gimbal can be used. Several other equivalent possibilities can be used instead. It is also disclosed a method to automatically point the artificial eye to light targets, whereby the difference between the PSD signal and a reference signal is fed back to the motorized mount.

The prior art artificial eyes can be used to determine the accuracy of the eye tracking algorithms to measure pupil size and other physical characteristics of the external features of the anterior part of the eye that are visible to the video cameras. However, prior art technology does not allow measuring the accuracy of the gaze position because available artificial eyes do not have an artificial fovea (the centre of the field of vision that corresponds to the part of the human retina that eye tracking system assume that is aligned with the real-world-object) and therefore cannot be used by eye-tracking algorithms for calibration and accuracy measurements purpose.

In the development of an eye-tracker product, the use of artificial eyes with known physical parameters allows one to optimize the product, by testing the fit of those parameters to the corresponding mathematical model parameters used in the product software.

In the production of an eye-tracker, the use of artificial eyes with calibrated gaze directions allows an automated and objective quality test of the eye-tracker product's performance, by verifying that the calibrated directions correspond to the gaze directions indicated by the product.

Gaze accuracy refers to the deviation of the gaze direction given by the eye-tracker from the true gaze direction of an eye; gaze precision refers to the variation of gaze direction given by the eye-tracker for a fixed eye gaze direction. Typical values of gaze direction errors, in a state of the art eye-tracker using artificial eyes to eliminate the artifacts of human eye movements, are < 0.5 degrees accuracy and < 0.1 degrees precision [1]. Gaze accuracy is key to using an eye-tracker for human-machine interfaces and safety functions, such as activating a display function depending on where the driver is looking at, or monitoring the state of awareness of the driver to the driving task in particular in the case of (semi-) autonomous driving.

Kappa angle is defined as the angle between the visual axis (connecting the fovea to the pupil center) and the pupillary axis (perpendicular to the cornea and passing through the pupil center). Kappa angle varies among individual, with a distribution peak of 5 degrees temporally [2]. For an artificial eye with the pupillary axis aligned with the optical axis, one can tailor the Kappa angle by offsetting the light sensor reference signal after calibrating the optical axis.

'Eye model' can be considered a specific implementation of an artificial eye: several examples from different manufactures of eye models can be found in the cited reference [3].

It is disclosed an artificial eye for eye tracking calibration of an eye-tracker, comprising:
an eye model comprising a foveal region;
an optical position sensor arranged at the foveal region for transducing the position of a light spot into a sensor position signal;
a two-axis rotational pivoting support upon which the eye model is mounted;
a two-axis actuator for rotating the eye model in said pivoting support;
a feed-back electronic circuit, connected between the sensor and actuator, arranged to cause rotation of the eye model by said actuator such that the sensor position signal matches a reference position signal.

The light spot is the illuminated area at the eye foveal region caused by an external light target. The position of the light spot can be defined as the centroid of the illuminated area. Typically, the position signal will be an X-Y signal, either analogical or digital.

In an embodiment, the reference position signal is adjustable to cause an off-set between the pupillary-axis of the eye model and a visual-axis defined by the reference position signal, in particular the reference position signal being adjustable by configuration of the feed-back electronic circuit. In an embodiment, the sensor is placed substantially at the back focal plane of the eye model.

In an embodiment, the sensor is a position sensing detector, PSD, or a four quadrant optical position sensor, or a tetra lateral optical position sensor.

In an embodiment, the sensor comprises a 2D-pixel image sensor and an electronic image processor coupled to the image sensor and configured to output the position of a light spot, in particular such that the mentioned reference position signal corresponds to a predetermined pixel selected from the image sensor pixels.

In an embodiment, the pivoting support is a two-axis gimbal.

The eye model comprises a cornea, a lens and a pupil.

It is also disclosed an eye tracking calibration system for an eye-tracker, comprising an artificial eye according to any of the embodiments and a gaze calibration scene, wherein the scene comprises an emitter for activating one or more light targets configured to cause a light spot at the sensor then causing the artificial eye to rotate towards an activated light target.

In an embodiment, the emitter is a plurality of spatially distributed LEDs or a display screen coupled to an electronic image generator configured to display bright spots on a dark background. In another embodiment, the light target or targets are punctual.

It is also disclosed an eye tracking calibration system comprising an additional artificial eye according to any of the disclosed embodiments, in particular said emitter having a divergence angle encompassing both artificial eyes.

It is also disclosed a method for calibrating the optical-axis of an artificial eye according to any of the disclosed embodiments, comprising the steps of:
emitting a light target by a light emitter;
capturing images of the artificial eye cornea reflecting said light target by a camera having a lens optically aligned with the light target;
cause rotation of the eye model by the actuator until the reflected light target is centred with the pupil of the eye model in the captured images;
recording the sensor position signal as a reference position signal.

In an embodiment, the camera lens and light target are optically aligned by a beam splitter, an illumination rig centred around the camera lens or an optical fibre light target centred with the camera lens.

It is also disclosed non-transitory storage media including program instructions for implementing a method for calibrating an artificial eye, the program instructions including instructions executable by an electronic data processor to carry out the method of the disclosed embodiments.

### BRIEF DESCRIPTION OF THE DRAWINGS

The following figures provide preferred embodiments for illustrating the disclosure and should not be seen as limiting the scope of invention.
**Figure 1****:** illustrates an embodiment of the artificial eye device.
**Figure 2****:** illustrates an embodiment of the artificial eye gazing at a light target.
**Figure 3****:** schematizes an embodiment of the feedback control circuit.
**Figure 4****:** illustrates an embodiment of the artificial eye optical-axis calibration.
**Figure 5****:** illustration of an image sensor embodiment and a quadrant position sensor embodiment.

### DETAILED DESCRIPTION

The disclosure claims an eye tracker calibration system using artificial eye devices to imitate human eyes and which are capable of gazing at given calibration light targets.

**Figure 1** shows an embodiment of an artificial eye with a optical-axis **10,** comprising an artificial eye model (cornea, lens and a pupil) **11,** a foveal sensor **12,** and a two-axis gimbal mount with a vertical axis actuator **13** and a horizontal axis actuator **14,** both said axis intercepting the centre of the artificial eye **15.**

In a preferred embodiment of the disclosure, the artificial eye is an ophthalmological eye model, the foveal sensor **12** is a 2D Position Sensing Detector (PSD) and the two-axis gimbal mount consists of two goniometers in tandem with intercepting orthogonal rotation axes. A gimbal is particularly suited to rotate the eye because the eye rotates about itself, like a natural eye.

**Figure 2** shows a punctual light target **20** producing an image on the artificial eye fovea **21,** whose output signal **22** is proportional to the deviation between the pupillary or optical-axis **23** and the visual-axis **24.**

In a preferred embodiment of the disclosure, the punctual light target **20** is a Light Emitting Diode (LED) with a divergence angle encompassing both the artificial eyes of the artificial test subject.

**Figure 3** shows the output signal from the foveal sensor **30** is subtracted from a reference signal **31,** resulting in an error signal **32** which inputs a motor driver **33** whose output **34** controls the artificial eye gimbal mount.

In a preferred embodiment of the disclosure, the reference signal can be adjusted to produce an off-set between the pupillary or optical-axis and the visual-axis of the artificial eye, imitating the corresponding K-angle of a human eye.

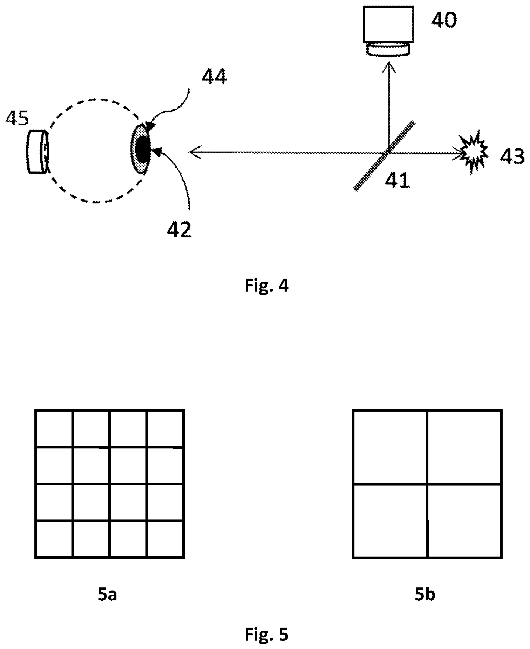

**Figure 4** shows a video camera **40,** imaging through a beam splitter **41** both the artificial pupil **42** and the reflection of the punctual light target **43** on the artificial cornea **44,** whose centroids coincide when the artificial eye optical-axis intercept the punctual light target **43.** After aligning the optical-axis, the signals from the foveal sensor **45** is recorded as reference values for feedback-control.

In the preferred embodiment of the disclosure, the video camera **40** is a machine vision camera and the punctual light target **43** coincides with the video camera **40** entrance pupil virtual image centre, upon reflection on the beam splitter **41.**

An embodiment comprises an apparatus for eye tracking calibration, comprising: an eye model, a motorized gimbal, a gaze calibration scene, and a feedback control device.

The eye model comprises: a cornea, a pupil, a lens, and a light sensor.

In an embodiment, the motorized gimbal mount rotates the eye-model around its centre.

In an embodiment, the gaze calibration scene comprises a plurality of light targets.

In an embodiment, the feedback control outputs an error signal from an input signal and a reference signal, and drives the motorized gimbals proportionally to the error signal.

In an embodiment, the lens is either placed behind the cornea or integrated in the cornea.

In an embodiment, the light sensor is placed substantially at the back focal plane of the eye model.

An embodiment comprises a method to point the eye-model to the light targets, wherein: the lens produces an image of a light target on the light sensor; the light sensor transduces said image into a position signal; the position signal inputs the feedback control device.

An embodiment comprises a calibration light target and an inspection camera
In an embodiment, the inspection camera can be aligned with the calibration light target by means of a beam splitter.

In an embodiment, the inspection camera forms an image of the eye-model pupil and an image of the calibration light target reflected by the eye-model cornea.

An embodiment comprises a method to calibrate the eye-model optical axis, wherein: the eye-model is rotated relative to the calibration light target; the image of the eye-model pupil is centred on the image of the calibration light target reflected by the eye-model cornea; the position signal of the light sensor is recorded as the reference signal.

A preferential embodiment uses an OEMI-7 from Ocular Instruments as eye model **11,** a lateral effect position sensor PDP90A from Thorlabs as position-sensing detector **12,** and a motorized 2-axis goniometer GNL20-Z8/M from Thorlabs as horizontal and vertical axes actuators **13** and **14.**

Any of the electronic image processor, electronic image generator, or electronic data processor may be implemented by an embedded data processing device such as an embedded PC like the Advantech MIO-5271 or by a general purpose computer such as a generic personal computer.

The term "comprising" whenever used in this document is intended to indicate the presence of stated features, integers, steps, components, but not to preclude the presence or addition of one or more other features, integers, steps, components or groups thereof.

It is to be appreciated that certain embodiments of the disclosure as described herein may incorporate code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof. The above described embodiments are combinable. The following claims further set out particular embodiments of the disclosure.

## Claims

1. Artificial eye for eye tracking calibration of an eye-tracker, comprising:
an eye model (11) comprising a foveal region (21);
an optical position sensor (12) arranged at the foveal region (21) for transducing the position of a foveal light spot into a sensor position signal;
a two-axis rotational pivoting support (13, 14) upon which the eye model (11) is mounted;
a two-axis actuator (13, 14) for rotating the eye model (11) in said pivoting support;
a feed-back electronic circuit, connected between the sensor and actuator;
wherein the eye model (11) comprises a pupil and a cornea having an integrated lens or a lens immediately next to the cornea towards the optical position sensor (12);
wherein the feed-back electronic circuit is arranged to cause rotation of the eye model (11) by said actuator such that the sensor position signal (22, 30) matches a reference position signal (31).

2. Artificial eye according to the previous claim wherein the reference position signal (31) is adjustable to cause an off-set between the pupillary-axis (23) of the eye model (11) and a visual-axis (24) defined by the reference position signal (31).

3. Artificial eye according to the previous claim wherein the reference position signal (31) is adjustable by configuration of the feed-back electronic circuit.

4. Artificial eye according to any of the previous claims wherein the sensor is placed substantially at the back focal plane of the eye model (11).

5. Artificial eye according to any of the previous claims wherein the sensor is a position sensing detector, PSD, or a four quadrant optical position sensor (5b), or a tetra lateral optical position sensor.

6. Artificial eye according to any of the claims 1 - 4 wherein the sensor comprises a 2D-pixel image sensor (5a) and an electronic image processor coupled to the image sensor and configured to output the 2D position of a light spot, in particular the reference position signal (31) corresponding to a predetermined pixel selected from the image sensor pixels.

7. Artificial eye according to any of the previous claims wherein the pivoting support is a two-axis gimbal (13, 14).

8. Eye tracking calibration system for an eye-tracker, comprising an artificial eye according to any of the previous claims and a gaze calibration scene, wherein the scene comprises an emitter for activating one or more light targets (20) configured to cause a light spot at the sensor for causing the artificial eye to rotate towards an activated light target (20).

9. Eye tracking calibration system for an eye-tracker, according to the previous claim wherein the emitter is a plurality of spatially distributed LEDs (20) or a display screen coupled to an electronic image generator configured to display bright spots (20) on a dark background.

10. Eye tracking calibration system for an eye-tracker, according to claim 8 or 9 wherein the light target or targets (20) are punctual.

11. Eye tracking calibration system for an eye-tracker, according to any of the claims 8 -10 comprising an additional artificial eye according to any of the claims 1 - 7.

12. Eye tracking calibration system for an eye-tracker, according to the previous claim, wherein said emitter has a light divergence angle encompassing both artificial eyes.

13. Method for calibrating the optical-axis of an artificial eye according to any of the claims 1 - 7, comprising the steps of:
emitting a light target (43) by a light emitter;
capturing images of the
artificial eye cornea (44) reflecting said light target (43) by a camera (40) having a lens optically aligned with the light target (43);
causing rotation of the eye model (11) by the actuator until the reflected light target is centred with the pupil (42) of the eye model (11) in the captured images;
recording the sensor position signal (22) as a reference position signal (31).

14. Method according to the previous claim wherein the camera (40) lens and light target (43) are optically aligned by a beam splitter (41), an illumination rig centred around the camera lens or an optical fibre light target centred with the camera lens.

## Patentansprüche

1. Künstliches Auge zur Kalibrierung eines Augentrackers, umfassend:
ein Augenmodell (11), umfassend einen fovealen Bereich (21);
einen optischen Positionssensor (12), der im fovealen Bereich (21) angeordnet ist, um die Position eines fovealen Lichtflecks in ein Positionssignal des Sensors umzuwandeln;
eine zweiachsig drehbare Halterung (13, 14), an der das Augenmodell (11) montiert ist;
ein zweiachsiger Aktuator (13, 14) zum Drehen des Augenmodells (11) in der genannten drehbaren Halterung;
eine elektronische Rückkopplungsschaltung, die zwischen den Sensor und den Aktuator geschaltet ist;
wobei das Augenmodell (11) eine Pupille und eine Hornhaut mit einer integrierten Linse oder einer Linse unmittelbar neben der Hornhaut in Richtung des optischen Positionssensors (12) umfasst;
wobei die elektronische Rückkopplungsschaltung so eingerichtet ist, dass sie eine Drehung des Augenmodells (11) durch den genannten Aktuator bewirkt, so dass das Positionssignal des Sensors (22, 30) mit einem Referenzpositionssignal (31) übereinstimmt.

2. Künstliches Auge nach dem vorangehenden Anspruch, wobei das Referenzpositionssignal (31) so einstellbar ist, dass ein Versatz zwischen der Pupillenachse (23) des Augenmodells (11) und einer durch das Referenzpositionssignal (31) definierten Sehachse (24) erzeugt wird.

3. Künstliches Auge nach dem vorangehenden Anspruch, wobei das Referenzpositionssignal (31) durch die Konfiguration der elektronischen Rückkopplungsschaltung einstellbar ist.

4. Künstliches Auge nach einem der vorangehenden Ansprüche, wobei der Sensor im Wesentlichen in der hinteren Brennebene des Augenmodells (11) angeordnet ist.

5. Künstliches Auge nach einem der vorangehenden Ansprüche, wobei der Sensor ein positionsempfindlicher Detektor, PSD, oder ein optischer Positionssensor mit vier Quadranten (5b) oder ein tetra-lateraler Positionssensor ist.

6. Künstliches Auge nach einem der Ansprüche 1 - 4, wobei der Sensor einen 2D-Pixel-Bildsensor (5a) und einen elektronischen Bildprozessor umfasst, der mit dem Bildsensor gekoppelt und so konfiguriert ist, dass er die 2D-Position eines Lichtflecks ausgibt, insbesondere das Referenzpositionssignal (31), das einem vorbestimmten Pixel entspricht, das aus den Pixeln des Bildsensors ausgewählt ist.

7. Künstliches Auge nach einem der vorangehenden Ansprüche, wobei die drehbare Halterung eine zweiachsige kardanische Aufhängung (13, 14) ist.

8. Kalibriersystem für das Augen-Tracking eines Augentrackers, umfassend ein künstliches Auge nach einem der vorangehenden Ansprüche und eine Blickkalibrierungsszene, wobei die Szene einen Emitter zum Aktivieren einer oder mehrerer Lichtziele (20) umfasst, die so konfiguriert sind, dass sie einen Lichtfleck auf dem Sensor erzeugen, um zu bewirken, dass sich das künstliche Auge zu einer aktivierten Lichtzielvorrichtung (20) hin dreht.

9. Kalibriersystem für das Augen-Tracking eines Augentrackers nach dem vorangehenden Anspruch, wobei der Emitter eine Vielzahl von räumlich verteilten LEDs (20) oder ein Bildschirm ist, der mit einem elektronischen Bildgenerator gekoppelt ist, der so konfiguriert ist, dass er helle Punkte (20) auf einem dunklen Hintergrund anzeigt.

10. Kalibriersystem für das Augen-Tracking eines Augentrackers nach Anspruch 8 oder 9, wobei das Lichtziel oder die Lichtziele (20) punktförmig sind.

11. Kalibriersystem für das Augen-Tracking eines Augentrackers nach einem der Ansprüche 8 - 10, umfassend ein zusätzliches künstliches Auge nach einem der Ansprüche 1-7.

12. Kalibriersystem für das Augen-Tracking eines Augentrackers nach dem vorangehenden Anspruch, wobei der Emitter einen Divergenzwinkel des Lichtstrahls aufweist, der die beiden künstlichen Augen umfasst.

13. Verfahren zur Kalibrierung der optischen Achse eines künstlichen Auges nach einem der Ansprüche 1 - 7, umfassend die Schritte:
Ausstrahlen eines Lichtziels (43) durch einen Lichtemitter;
Erfassen von Bildern der Hornhaut (44) des künstlichen Auges, die das genannte Lichtziel (43) reflektiert, durch eine Kamera (40) mit einem Objektiv, das optisch auf das Lichtziel (43) ausgerichtet ist;
Auslösen einer Drehung des Augenmodells (11) durch den Aktuator, bis das reflektierte Lichtziel mit der Pupille (42) des Augenmodells (11) in den aufgenommenen Bildern zentriert ist;
Aufzeichnen des Positionssignals des Sensors (22) als Referenzpositionssignal (31).

14. Verfahren nach dem vorangehenden Anspruch, bei dem das Kameraobjektiv (40) und das Lichtziel (43) durch einen Strahlenteiler (41), eine um das Kameraobjektiv zentrierte Beleuchtungsvorrichtung oder ein mit dem Kameraobjektiv zentriertes Lichtziel aus einer optischen Faser optisch ausgerichtet werden.

## Revendications

1. Oeil artificiel pour l'étalonnage du suivi d'oeil d'un dispositif de suivi d'oeil, comprenant :
un modèle d'oeil (11) comprenant une zone fovéale (21) ;
un capteur de position optique (12) arrangé dans la zone fovéale (21) destiné à la transduction de la position d'un point lumineux fovéal vers un signal de position de capteur;
un support pivotant de rotation à deux axes (13, 14) sur lequel le modèle d'oeil (11) est monté ;
un actionneur à deux axes (13, 14) pour pivoter le modèle d'oeil (11) dans ledit support pivotant ;
un circuit électronique de retour, raccordé entre le capteur et l'actionneur ;
dans lequel le modèle d'oeil (11) comprend une pupille et une cornée ayant un objectif intégré ou un objectif juste après la cornée vers le capteur de position optique (12) ;
dans lequel le circuit électronique de retour est arrangé pour causer une rotation du modèle d'oeil (11) par ledit actionneur tel que le signal de position de capteur (22, 30) corresponde à un signal de position de référence (31).

2. Oeil artificiel selon la revendication précédente dans lequel le signal de position de référence (31) est ajustable pour causer un désalignement entre l'axe pupillaire (23) du modèle d'oeil (11) et un axe visuel (24) défini par le signal de position de référence (31).

3. Oeil artificiel selon la revendication précédente dans lequel le signal de position de référence (31) est ajustable par configuration du circuit électronique de retour.

4. Oeil artificiel selon l'une quelconque des revendications précédentes dans lequel le capteur est placé substantiellement sur le plan focal arrière du modèle d'oeil (11).

5. Oeil artificiel selon l'une quelconque des revendications précédentes dans lequel le capteur est un détecteur capteur de position, PSD, ou un capteur de position optique à quatre quadrants (5b), ou un capteur de position optique tétra-latéral.

6. Oeil artificiel selon l'une quelconque des revendications 1-4 dans lequel le capteur comprend un capteur d'images à pixel 2D (5a) et un traiteur d'images électronique accouplé au capteur d'images et configuré pour émettre la position 2D d'un point lumineux, le signal de position de référence (31) correspondant en particulier à un pixel prédéterminé sélectionné parmi les pixels de capteur d'images.

7. Oeil artificiel selon l'une quelconque des revendications précédentes dans lequel le support pivotant est un cardan à deux axes (13, 14).

8. Système d'étalonnage du suivi d'oeil pour un dispositif de suivi d'oeil, comprenant un oeil artificiel selon l'une quelconque des revendications précédentes et une scène d'étalonnage de regard, dans lequel la scène comprend un émetteur pour activer une ou plusieurs cibles lumineuses (20) configuré pour causer un point lumineux sur le capteur pour faire en sorte que l'oeil artificiel pivote vers une cible lumineuse activée (20).

9. Système d'étalonnage du suivi d'oeil pour un dispositif de suivi d'oeil selon la revendication précédente dans lequel l'émetteur est une pluralité de LEDs distribués dans l'espace (20) ou un écran d'affichage accouplé à un générateur d'images électronique configuré pour afficher des points brillants (20) sur un fond sombre.

10. Système d'étalonnage du suivi d'oeil pour un dispositif de suivi d'oeil selon la revendication 8 ou 9 dans lequel la ou les cibles lumineuses (20) sont ponctuelles.

11. Système d'étalonnage du suivi d'oeil pour un dispositif de suivi d'oeil, selon l'une quelconque des revendications 8-10 comprenant un oeil artificiel supplémentaire selon l'une quelconque des revendications 1-7.

12. Système d'étalonnage du suivi d'oeil pour un dispositif de suivi d'oeil, selon la revendication précédente, dans lequel ledit émetteur a un angle de divergence de lumière englobant les deux yeux artificiels.

13. Procédé pour l'étalonnage de l'axe optique d'un oeil artificiel selon l'une quelconque des revendications 1-7, comprenant les étapes de :
émettre une cible lumineuse (43) à travers un émetteur de lumière ;
capturer des images de la cornée de l'oeil artificiel (44) reflétant ladite cible lumineuse (43) à l'aide d'une caméra (40) ayant un objectif aligné de manière optique avec la cible lumineuse (43) ;
causer la rotation du modèle d'oeil (11) par l'actionneur jusqu'à ce que la cible lumineuse reflétée soit centrée avec la pupille (42) du modèle d'oeil (11) dans les images capturées ;
enregistrer le signal de position de capteur (22) en tant que signal de position de référence (31).

14. Procédé selon la revendication précédente dans lequel l'objectif de caméra (40) et la cible lumineuse (43) sont alignés de manière optique par un séparateur de faisceau (41), une installation d'éclairage centrée autour de l'objectif de caméra ou une cible lumineuse de fibre optique centrée avec l'objectif de caméra.
